**Europäisches Patentamt**

**European Patent Office**

**Office européen des brevets**

(19)

(11) Veröffentlichungsnummer: **0 128 893 B1**

(12) **EUROPÄISCHE PATENTSCHRIFT**

(45) Veröffentlichungstag der Patentschrift:
26.07.89

(51) Int. Cl.⁴: **C 08 J 3/20, B 01 F 3/12, B 01 F 5/18, B 29 B 7/44**

(21) Anmeldenummer: **83900011.4**

(22) Anmeldetag: **20.12.82**

(86) Internationale Anmeldenummer:
**PCT/CH 82/00135**

(87) Internationale Veröffentlichungsnummer:
**WO 84/02530 (05.07.84 Gazette 84/16)**

(54) **VERFAHREN ZUR KONTINUIERLICHEN HERSTELLUNG VON RIESELFÄHIGEN UND HOMOGENEN GEMISCHEN AUS KUNSTSTOFFEN MIT ZUSÄTZEN.**

(43) Veröffentlichungstag der Anmeldung:
**27.12.84 Patentblatt 84/52**

(45) Bekanntmachung des Hinweises auf die Patenterteilung:
**26.07.89 Patentblatt 89/30**

(84) Benannte Vertragsstaaten:
**AT BE CH DE FR GB LI NL SE**

(56) Entgegenhaltungen:
**EP-A- 0 007 624
EP-A- 0 008 712
BE-A- 561 630
DE-A- 2 252 104
DE-A- 3 014 741
DE-A- 3 125 396
GB-A- 2 087 247
US-A- 4 184 026**

(73) Patentinhaber: **BUSS AG, Lautengartenstrasse 7, CH-4052 Basel (CH)**

(72) Erfinder: **WEHRLI, Werner, Markgräflerstrasse 5/1, CH-4057 Basel (CH)**
Erfinder: **FRANZ, Peter, Sonnenbergstrasse 28, CH-4127 Birsfelden (CH)**

(74) Vertreter: **Rottmann, Richard, Rottmann Patentanwälte AG Dufourstrasse 101, CH-8034 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur kontinuierlichen Herstellung von reaktionsbereiten, rieselfähigen und homogenen Vorgemischen aus körnigen oder pulverförmigen Feststoffen mit Flüssigkeitskomponenten und/oder schmelzbaren Additiven in einem senkrechten Durchlaufmischer, welcher in einem Gehäuse auf einer senkrechten Welle rotierende Schleuderscheiben aufweist.

Die Aufgabe der Erfindung besteht darin, die Mischzeit unter Beibehaltung der Mischgüte auf wenige Sekunden zu reduzieren, um die thermische Beanspruchung zeitlich, während des Mischvorganges so kurz wie möglich zu halten, da entweder die Feststoffteilchen und/oder die Flüssigkeitskomponenten gegen eine längere thermische Beanspruchung empfindlich sind.

Gemäß der herrschenden Auffassung muss bei der PVC-Heißmischung, beim «Dry-Blend» eine Mischungstemperatur erreicht werden, die unterhalb des Plastifizierbereiches der PVC-Mischung liegt, im allgemeinen zwischen 85 und 150 °C je nach Aufbereitungsverfahren.

Für Weich-PVC wird der Weichmacher ab 50 bis 60 °C zugegeben. Für Hart-PVC wird der Plastrohstoff bis zum Erweichen oder Schmelzen erwärmt, um dann mit den zugegebenen Stabilisatoren und gegebenenfalls Füllstoffen zu agglomerieren und ein rieselfähiges angesintertes Pulver zu bilden. Nach der bis heute angewendeten Technik benutzte man für diese Aufbereitungsstufe absatzweise arbeitende Maschinen, entweder langsam laufende und beheizbare Bandschnecken oder Pflugscharmischer oder schnellaufende Turbomischer von kleinerem Kammervolumen, bei denen ein Heizmischer häufig mit einem nachfolgenden Kühlmischer kombiniert ist, um die Charge rasch abzukühlen. Da der Temperaturanstieg von der Chargengröße, von der spezifischen Wärme des Produktes, sowie von der pro Zeiteinheit eingeleiteten Energie abhängt und die ersten beiden Parameter feststehen, konzentrierten sich die Entwicklungen darauf, immer höhere Energien pro Zeiteinheit in die Mischung einzuleiten.

Beim Heißmischen oder Trockenmischen, d. h. Mischen und gleichzeitiges Aufheizen des PVC bis unterhalb der Plastifiziertemperatur, d. h. bis ca. 130 °C, werden alle Additive zerrieben, aufgeschmolzen und vom PVC-Korn absorbiert.

Das Produkt des Heißmischens nennt man Dry-Blend. Zur Herstellung von «Dry-Blend» wurden Energieeinleitungen von 100–150 KJ/kg als notwendig erachtet.

Auch andere Kunststoffvormischungen werden in ähnlicher Weise aufbereitet.

Erfindungsgemäß wird jetzt bei einem eingangs erwähnten Verfahren vorgeschlagen, daß die Feststoffe bei Raumtemperatur in den Durchlaufmischer eindosiert zu einem homogenen Gemenge verwirbelt werden, worauf anschließend entweder das Gemenge mit erhitzten Flüssigkeitskomponenten benetzt, oder Flüssigkeitskomponente direkt aus kinematisch erweichten, zum Schmelzen gebrachten Additiven erzeugt werden, wobei die Schmelze sich mit den Feststoffzusätzen verbindet und ein rieselfähiges Pulver entsteht.

Zum kinematischen Erweichen der Additive werden die verwirbelten Ausgangstoffe zweckmässiger Weise durch einen engen Spalt getrieben, wo das Aufschmelzen der Additive erfolgt.

Aus der GB-A-2 087 247 ist die Herstellung von thermoplastischem Strassenmarkierungsmaterial bekannt geworden, wobei vorgemischte Trockenkomponenten eines Gemisches mit Hilfe einer Schnecke in ein Mischgefäß geführt werden, wo die Zugabe eines flüssigen Plastiziermittels erfolgt, worauf das Plastiziermittel mit den vorgemischten Komponenten dispergiert wird. Dazu sind rotierende, übereinander angeordnete Mischarme vorhanden.

Demgegenüber wird gemäß der Erfindung ein homogenes Vorgemisch hergestellt, welches später in üblicher Weise z. B. in einem Kneter oder in einer anderen Aufbereitungsmaschine zum Endprodukt verarbeitet wird.

Das thermoplastische Strassenmarkierungsmaterial gemäß der britischen Patentschrift weist keine Empfindlichkeit wegen Zersetzung auf, und es entstehen keine Probleme weder mit der Lagerung noch mit der Verarbeitung.

Zur Ausführung des Verfahrens eignet sich eine Einrichtung, welche ein geschlossenes, vertikales Gehäuse mit hintereinander auf einer Welle angeordneten scheibenförmigen Mischorgane aufweist. Diese Mischorgane begrenzen mit der Innenwand des Gehäuses eine Spalt, in welchem das Aufschmelzen der Additive erfolgt.

Das vorgeschlagene Verfahren kann sowohl für Hart- als auch für Weich-PVC angewendet werden. Für Weich-PVC werden die Flüssigkeitskomponenten auf 80–200 °C aufgeheizt, während für Hart-PVC der Durchtrittspalt zwischen den Mischorganen und der Innenwand des Gehäuses verkleinert wird, so daß im hindurchtretenden Material hohe Energien kinematisch eingeleitet werden.

Auf beiliegender Zeichnung ist eine Einrichtung zur Ausführung des vorgeschlagenen Verfahrens beispielsweise dargestellt. Es zeigen:

Fig. 1 eine schematisch gezeichnete Anlage

Fig. 2 eine Mischvorrichtung der Anlage in Vertikalschnitt, und

Fig. 3 eine Variante zu Fig. 1.

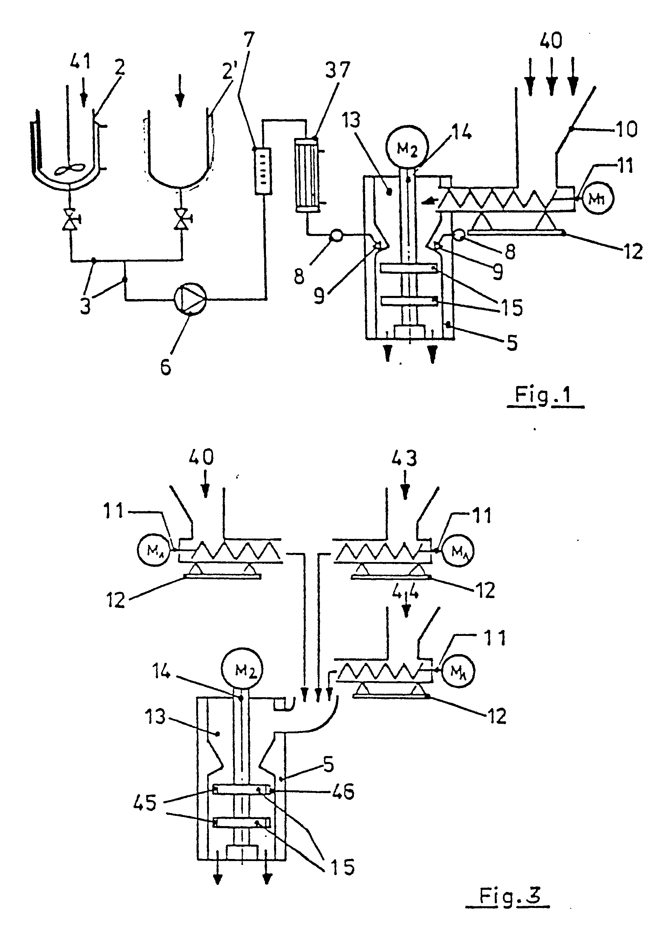

Zum Dispergieren von körnigen oder pulverigen Feststoffen mit Flüssigkeitskomponenten, insbesondere zur kontinuierlichen Herstellung von Weich-PVC Dry-Blend wird eine aus der Fig. 1 ersichtliche Anlage verwendet. Die Anlage nach Fig. 3 dient zur Aufbereitung von rieselfähigen Hart-PVC-Vormischungen.

Die aus fig. 1 ersichtliche, schematisch dargestellte Anlage weist einen Behälter 2 mit Heizmantel und Rührwerk zur Aufnahme der Flüssigkeitskomponenten 41 auf und ist über eine Leitung 3 an einen vertikalen Durchlaufmischer 13 angeschlossen, welcher ein zylindrisches Gehäuse 5 besitzt.

Die Gehäuselänge entspricht etwa dem doppelten Durchmesser des Gehäuses. Ein an die Leitung 3 zuschaltbarer Behälter 2' dient zur Aufnahme von Spülflüssigkeit zur Reinigung des Durchlaufmischers 13 bei Wechsel der Flüssigkeitskomponenten.

In die Leitung 3 ist eine Dosierpumpe 6, ein Nacherhitzer 37 und ein Durchflußmesser 7 eingebaut.

Die erwähnte Leitung 3 ist an eine das Gehäuse 5 umgebende Ringleitung 8 angeschlossen, die mit Einspritzdüsen 9 versehen ist, die in das Innere des Gehäuses 5 münden und durch welche die Flüssigkeitskomponenten aus dem Behälter 2 in den Durchlaufmischer 13 eingespritzt werden.

Zur Aufnahme der Feststoffe 40 dient ein Waagen-Bunker 10 an dessen Boden eine in das Gehäuse 5 des Durchlaufmischers 13 mündende Austragsschnecke 11 vorhanden ist. Der Auslaß der Austragsschnecke 11 befindet sich etwas oberhalb der Ringleitung 8 im Gehäuse 5. Sowohl der Bunker 10 als auch die Austragsschnecke 11 sind auf einer Brückenwaage 12 angeordnet. Die Austragsschnecke 11 wird durch den Regelmotor $M_1$ angetrieben.

Der vertikal angeordnete Durchlaufmischer 13 weist eine vertikale sich nach unten erstreckende Welle 14 auf, die mit zwei Rotoren 15 ausgerüstet ist. Zum Antrieb der Welle 14 dient ein oben angeordneter Motor $M_2$.

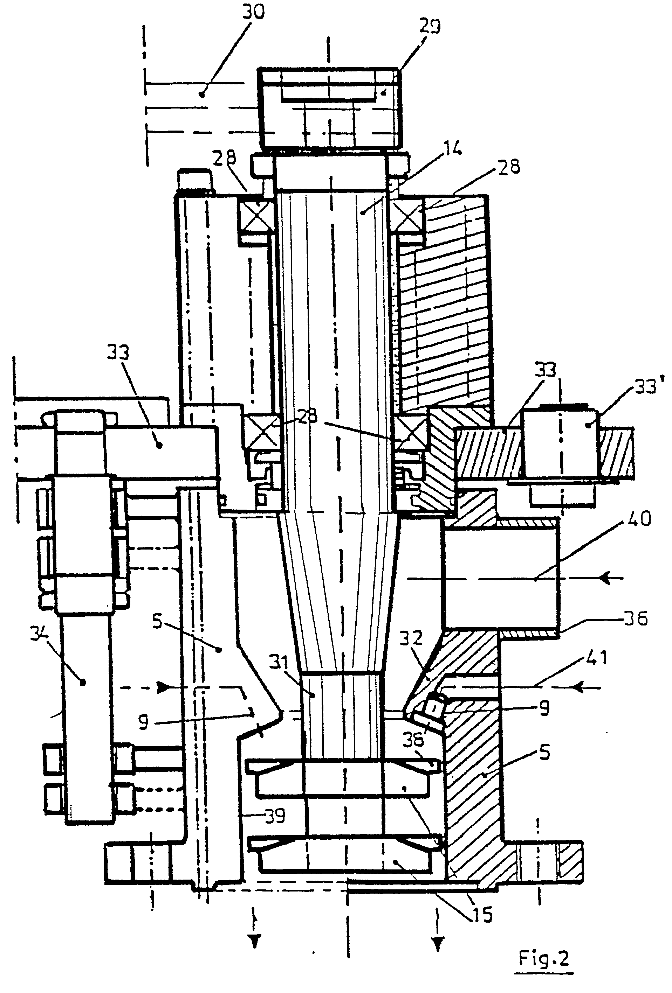

Die nähere Ausbildung des Durchlaufmischers 13 ist aus der Fig. 2 ersichtlich. Im Gehäuse 5 des Durchlaufmischers sind oben Lager 28 vorhanden, in welchen die Welle 14 fliegend gelagert ist. Das obere, aus dem Gehäuse 5 ragende Ende der Welle 14 trägt eine Riemenscheibe 29, welche über einem Antriebsriemen 30 mit dem hier nicht gezeigten Motor $M_2$ in Verbindung steht.

Das untere Ende 31 der Welle 14 ist verjüngt ausgebildet und trägt zwei dicht übereinander angeordnete Rotoren 15. Im Bereiche der Rotoren 15 ist die Wand 39 des Gehäuses 5 glatt und oberhalb des oberen Rotors 15 ist eine ringförmige Einschnürung 32 vorgesehen, unter welcher ein bis drei Einspritzdüsen 9 für die Flüssigkeitskomponenten angeordnet sind. Das ganze zylindrische Gehäuse 5 ist geteilt und aufklappbar; es hängt an einer dreieckförmigen Tragplatte 33 und ist mittels Klemmschrauben zusammengehalten. Die Tragplatte 33 ruht auf Auflage-Puffern 33' und das Gehäuse 5 wird durch zwei Säulen 34 gehalten. Am Stutzen 36 des Gehäuses 5 wird die Austragsschnecke 11 für die Zufuhr eines Feststoff-Vorgemisches angeschlossen.

Die Rotorscheiben 15 sind mit radial verteilten Flügeln 38 versehen. Es können aber auch andere geeignete Rotorformen verwendet werden, wobei eine Tangentialgeschwindigkeit von 3–50 m/sec einstellbar ist.

Durch die beschriebene einfache Anordnung der Rotoren und des glatten Gehäuses konnte eine wesentlich auf vorzugsweise 2–5 Sekunden verkürzte mittlere Verweilzeit des Produktes zwischen den Rotoren bzw. zwischen dem untersten Rotor und Auslauf erzielt werden, so daß ein Verkleben der mit dem Produkt in Berührung stehenden Teile des Mischaggregates verhindert wird.

Die hohe Wellendrehzahl von vorzugsweise 2000–7000 U/min. und die konstruktive Ausgestaltung des Mischaggregates ermöglichen eine störungsfreie, kontinuierliche Produktion qualitativ hochstehender Feststoff-Dispersionen bei minimalem Energieverbrauch, der nur etwa 0,001–0,08 kWh/kg beträgt. Die achsiale Länge der Mischzone entspricht annähernd dem Durchmesser des Gehäuses 5 der Einrichtung. Für den Feststoff-Zulauf und die trockene Feststoff-Desintegration wird eine gleich große Länge benötigt, woraus eine totale Länge des Verfahrensteils im Gehäuse resultiert, welche dem zweifachen Durchmesser entspricht.

Durch die beschriebene Lagerung kann die Welle fliegend ausgeführt werden, womit eine Lagerung am Auslaufende der Welle entfällt. Daraus resultiert der bei der Herstellung von Dispersionen wichtige freie, ungehinderte Abfluß aus dem Mischaggregat. Das Produkt kann unmittelbar nach Austritt aus dem Mischapparat unter Vakuumanwendung in einem Fallrohr ohne Wärmezufuhr entgast werden, was eine wirtschaftliche Lösung darstellt.

Wird in das Gemisch kein wesentlicher Anteil einer Flüssigkomponente zugegeben, also beispielsweise eine rieselfähige und homogene Mischung für Hart-PVC erzeugt, dann muß die Flüssigkeitskomponente aus dem zugegebenen Additivanteil kinematisch als Erweichen und Anschmelzen durch die Verwirbelung erzeugt werden. Die gleichmäßige Dispersion aller Zutaten ist dabei kritischer und schwieriger als bei flexiblen Mischungen.

Die Anlage nach fig. 3 ist diesen Anforderungen angepaßt. Der Durchlaufmischer 13 ist der gleiche wie in Fig. 1 jedoch ohne Einspritzdüsen ausgeführt. Bei 40 wird PVC und bei 43 und 44 Füllstoff separat dem Gehäuse 5 mit Hilfe der Austragschnecken 11 zugeführt und beide gelangen in den Durchlaufmischer 13, wo die Rotoren 15 angeordnet sind. Auf die Rotoren 15 sind Ringe 45 aufgeklemmt, um den Durchtrittspalt 46 zwischen der Gehäusewandung 5 und dem Rotor zu verengen. Es stehen Aufklemmringe mit verschiedener Dicke zur Verfügung, so daß die Spaltbreite vorgewählt werden kann. In diesem Spalt 46 erfolgt ein plötzliches Aufschmelzen der Additive, die dann im Raum unterhalb des zugehörigen Rotors 15 vom körnigen PVC aufgesogen werden.

Die Variation Scherspalt und Drehzahl ermöglicht die Anpassung der eingeleiteten Energie an die qualitativen Erfordernisse bei schonender Temperatur/Zeit-Beanspruchung.

**Patentansprüche**

1. Verfahren zur kontinuierlichen Herstellung von reaktionsbereiten, rieselfähigen und homogenen Vorgemischen aus körnigen oder pulverförmigen Feststoffen mit Flüssigkeitskomponenten und/oder schmelzbaren Additiven in einem senkrechten Durchlaufmischer, welcher in einem Gehäuse auf einer senkrechten Welle rotierende Schleuderscheiben aufweist, dadurch gekennzeichnet, daß die Feststoffe bei Raumtemperatur in den Durchlaufmischer eindosiert zu einem homogenen Gemenge verwirbelt werden, worauf anschließend entweder das Gemenge mit erhitzten Flüssigkeitskomponenten benetzt, oder Flüssigkeitskomponente direkt aus kinematisch erweichten, zum Schmelzen gebrachten Additiven erzeugt werden, wobei die Schmelze sich mit den Feststoffzusätzen verbindet und ein rieselfähiges Pulver entsteht.

2. Verfahren nach Anspruch 1, dadurch gekennzeichnet, daß zum kinematischen Erweichen der Additive, die verwirbelten Ausgangsstoffe durch einen engen Spalt getrieben werden, wo das Aufschmelzen der Additive erfolgt.

3. Einrichtung zur Ausführung des Verfahrens nach den Ansprüchen 1 und 2, welche ein geschlossenes, vertikales Gehäuse (5) mit hintereinander auf einer Welle (14) angeordneten, scheibenförmigen Mischorganen (15) aufweist, dadurch gekennzeichnet, daß die scheibenförmigen Mischorgane (15) mit der Innenwand des Gehäuses einen Spalt (46) begrenzen, in welchem das Aufschmelzen der Additive erfolgt.

4. Einrichtung nach Anspruch 3, dadurch gekennzeichnet, daß die scheibenförmigen Mischorgane (15) mit auswechselbaren Ringen (45) versehen sind, mittels welchen der Durchtrittsspalt (46) zwischen der Gehäusewandung und den Mischorganen verändert werden kann.

## Claims

1. Process for the continuous production of reactive, pourable and homogeneous premixes of granular or particulate solids with fluid components and/or fusible additives in a vertical continuous mixer, which has rotating shearing discs on a vertical shaft in a housing, characterized in that the solids metered into the continuous mixer at room temperature are swirled to form a homogeneous physical mixture, whereupon subsequently either the physical mixture is wetted with heated fluid components, or fluid component is directly produced from dynamically softened additives which have been caused to melt, where the melt combines with the solid components and a pourable powder results.

2. Process according to Claim 1, characterized in that in order to dynamically soften the additives, the swirled starting materials are driven through a narrow gap, where fusion of the additives is brought about.

3. Device for operating the process according to Claims 1 and 2, which has a closed vertical housing (5) with disc-shaped mixing members (15) arranged sequentially on a shaft (14), characterized in that the disc-shaped mixing members (15) delineate a gap (46) with the inner wall of the housing, in which the fusion of the additives is brought about.

4. Device according to Claim 3, characterized in that the disc-shaped mixing members (15) are provided with interchangeable rings (45), by means of which the flow path gap (46) between the wall of the housing and the mixing members can be altered.

## Revendications

1. Procédé pour la fabrication en continu de prémélanges aptes pour la réaction, coulants et homogènes à base de substances solides granuleuses ou pulvérulentes avec des composants de fluidité et/ou des additifs fusibles dans un mélangeur continu vertical, qui présente dans une enceinte des disques de centrifugation tournant sur un arbre vertical, caractérisé en ce que les substances solides introduites à la température ambiante dans le mélangeur continu sont tourbillonnées en un mélange homogène, puis finalement soit que le mélange est mouillé avec des composants de fluidité réchauffés, soit que les composants de fluidité soient produits directement à partir d'additifs ramollis cinématiquement, apportés pour la fusion, le fondant se liant aux additifs solides et créant une poudre coulante.

2. Procédé selon la revendication 1, caractérisé en ce que pour le ramollisement cinématique des additifs, les produits de sortie tourbillonnés sont amenés au travers d'une fente étroite, où intervient la fusion des additifs.

3. Dispositif pour la mise en œuvre du procédé selon les revendications 1 et 2, qui comporte une enceinte fermée, verticale (5) avec des organes de mélange (15) en forme de disques disposés l'un derrière l'autre sur un arbre (14), caractérisé en ce que les organes de mélange (15) en forme de disques délimitent avec la paroi intérieure de l'enceinte une fente (46) dans laquelle intervient la fusion des additifs.

4. Dispositif selon la revendication 3, caractérisé en ce que les organes de mélange (15) en forme de disques sont munis de couronnes (45) interchangeables, grâce auxquelles la fente de passage (46) entre la paroi de l'enceinte et les organes de mélange peut être modifiée.

Fig.1

Fig.3

Fig.2